# FASCICULE DE BREVET EUROPEEN

(11) **EP 0 845 884 B1**
(45) Date de publication et mention de la délivrance du brevet: **20.09.2000**
(21) Numéro de dépôt: 97402841.7
(22) Date de dépôt: 26.11.1997
(51) Int. Cl.: H04B 10/24

(54) **Dispositif bidirectionnel de transposition entre des signaux optiques et des signaux électriques, pour système de communication**
Bidirektionale Umsetzungsanordnung zwischen optischen und elektrischen Signalen für ein Übertragungssytem
Bidirectional transducing arrangement between optical and electrical signals for a communication system

(30) Priorité: 28.11.1996 FR 9614583
(43) Date de publication de la demande: 03.06.1998
(73) Titulaire: FRANCE TELECOM, 75015 Paris (FR)
(72) Inventeur: Minot, Christophe, 75015 Paris (FR); Palmier, Jean-François, 91600 Savigny Sur Orge (FR); Bensoussan, Marcel, 92100 Boulogne (FR)
(74) Mandataire: Texier, Christian

(56) Documents cités:
- EP-A- 0 391 597
- EP-A- 0 732 782
- WO-A-95/33317

## Description

La présente invention concerne le domaine des systèmes de communication mettant en oeuvre des signaux optiques et des signaux électriques.

Plus précisément la présente invention concerne un dispositif bidirectionnel de transposition entre des signaux optiques et des signaux électriques.

Plusieurs domaines d'applications font ressortir le besoin en composants permettant de convertir des signaux optiques (en général véhiculés par des fibres optiques) en ondes électromagnétiques pour la propagation en espace libre. C'est en particulier le cas en télécommunications, où, pour relier les abonnés à des services bien définis, il est préférable, pour diverses raisons liées au système ou au service à fournir, d'employer les ondes hertziennes (radio) pour le dernier bond depuis une borne connectée au réseau de distribution par fibre optique. Cette technique profitera à la généralisation du terminal d'abonné portable en s'insérant de façon souple et économique dans les infrastructures de radiocommunications existantes.

Le domaine des télécommunications connaît une évolution de la demande vers le haut débit, que ce soit pour le RDFO (réseau de distribution par fibre optique) ou pour les réseaux hertziens pour mobiles. Tout plaide, pour des raisons essentiellement techniques de bande passante, pour la convergence de ces deux réseaux et leur évolution vers un prolongement en espace libre (réseau d'accès large bande par radio à très haute fréquence, typiquement quelques dizaines de GHz) des réseaux fixes à hauts débits sur fibre optique (voir par exemple les références [1, 2, 3, 4, 5, 6, 7]).

Dans les réseaux d'accès large bande par radio en bout de fibre optique ainsi proposés, la couverture radio serait assurée par des stations de base réparties en extérieur ou à l'intérieur d'immeubles. Les stations sont reliées par fibres optiques à un poste central. En particulier il est démontré que, pour la desserte d'immeubles, ces architectures sont dans beaucoup de cas plus avantageuses que celles d'un réseau mixte fibre-cable coaxial ou même fibre jusque chez l'abonné [Ref. 6,7]. En effet ces liaisons radio à hauts débits greffées sur le réseau de distribution par fibre optique offrent non seulement tous les avantages liés à la mobilité mais permettent des économies importantes de câblage terminal.

Dans les architectures à l'étude actuellement [Réf. 3, 4, 5], le signal radio, généré dans un poste central, est transporté sous forme optique, par le réseau de distribution à fibres optiques, vers les stations du réseau d'accès, dans lesquelles s'effectue une simple conversion optique-radio pour assurer la liaison vers les abonnés. Cette voie du poste central vers les abonnés est dénommée généralement voie descendante.

La conception de la voie opposée, dite montante, des abonnés vers le poste central, est plus complexe. Il faut en effet retranscrire sous forme optique les informations qui arrivent sur chaque station du réseau d'accès. C'est en fait la même fonction que sur la voie descendante, sur laquelle on a cherché à la centraliser par souci d'économie mais à des débits en général plus faibles.

Le développement de ces futurs réseaux se heurte à la difficulté de disposer pour le terminal radio de composants actifs fiables et bon marché.

Un certain nombre de composants ont déjà été mis au point permettant d'assurer les fonctions de conversion optique-millimétrique séparément pour la voie descendante du central et pour la voie remontante de la station. Il s'agit de transpositeur duplexeur optique-millimétrique hybride rassemblant dans un même module des composants unitaires du type détecteur, oscillateur, coupleur, source optique et modulateur. Le montage d'un ensemble aussi complexe de composants a un impact considérable sur le coût global du terminal.

Dans une liaison radio sur fibre du type décrit dans les documents précités, le poste central est relié par fibre optique à un certain nombre de stations équipées chacune d'une antenne.

Pour la voie descendante, le signal radio est imprimé sur la porteuse optique au poste central.

Deux approches sont envisagées, selon que ce signal comporte ou non la porteuse radio. A la station le signal radio extrait de la porteuse optique alimente l'antenne qui communique par radio en espace libre avec les terminaux mobiles. La porteuse radio est ou bien directement issue de la conversion optique-radio si elle existe sur la porteuse optique, ou bien générée par un oscillateur local dans le cas contraire.

Pour la voie remontante les signaux radio captés par l'antenne de la station modulent une porteuse optique générée par une source optique. Cette onde optique est ensuite transmise au poste central sur une fibre différente de celle de la voie descendante, voire sur la même fibre.

Côté récepteur pour la voie descendante, au niveau de la station terminale en bout de fibre optique, la fonction à assurer est une conversion optique-millimétrique.

Elle peut être effectuée par simple photodétection du signal optique issu de la fibre optique, soit dans une photodiode ultra rapide, suivie d'une amplification à transistors [8] ; soit directement dans un phototransistor ce qui permet d'avoir en plus du gain de façon plus intégrée [9]. La mise en oeuvre de cette solution a montré que les puissances du signal radio extraites de la porteuse optique restent encore assez faibles et cela malgré l'apport du phototransistor. Pour avoir un niveau de puissance suffisant pour attaquer l'antenne il faut ajouter un amplificateur hyperfréquence complexe et coûteux, surtout à haute fréquence comme cela est projeté dans ces systèmes.

Pour pallier à cette limitation une approche alternative, plus avantageuse au plan puissance, est actuellement envisagée. Elle consiste à utiliser un oscillateur millimétrique à commande optique. Elle apparaît plus économique si l'on sait réaliser des oscillateurs suffisamment puissants à bas coût, par exemple dans des composants unitaires de technologie beaucoup plus facile que celle des transistors pour amplificateurs millimétriques. Plusieurs travaux ont été publiés sur des sources millimétriques commandées par un signal optique [10, 11, 12, 13]. Plus particulièrement le principe d'exploiter le fort gain en courant d'un phototransistor photosensible à 1,3 µm en l'intégrant dans un circuit oscillateur ayant une forte puissance de sortie et possédant une large gamme d'accrochage à de faibles puissances optiques incidentes a été démontré [14]. Cependant les fréquences obtenues de cette manière restent pour le moment assez basses.

Les approches décrites ci-dessus traitent séparément les fonctions optiques et les fonctions électriques. Une solution originale associant les deux fonctions dans un même composant a été proposée et testée récemment avec succès dans une expérimentation système [16]. Elle consiste à utiliser une diode millimétrique à super-réseau possédant une conductance différentielle négative [15, 16].

Au niveau de l'émetteur pour la voie remontante, dans la station terminale en bout de fibre optique, la fonction à assurer est une conversion électrique-optique. Sur cette voie, le signal électrique est supposé issu d'une démodulation, il est donc en bande de base. La solution, actuellement expérimentée au plan système, utilise un laser à semiconducteur [16]. Le laser est directement modulé par le signal électrique issu de l'antenne et renvoie l'information vers le central à une longueur d'onde identique ou différente de celle de la voie descendante suivant le codage retenu. Il s'agit de structures tout de même assez complexes réalisées en optique guidée qui posent donc des problèmes délicats de montage et de coût.

L'inconvénient majeur du système précité de l'état de la technique est sa complexité liée au nombre de composants sophistiqués qu'il requiert, avec des conséquences évidentes sur son coût économique total. Un point à souligner plus particulièrement est la séparation totale des fonctions sur les deux voies : chaque fonction est remplie par un composant qu'il faut implanter tant électriquement qu'optiquement sur le flux d'information. Or les coûts d'assemblage et d'interconnexion (optique surtout) interviennent pour une part importante dans celui du système, d'autant plus que le composant mis en oeuvre habituellement (lasers ou modulateurs) fonctionne en propagation guidée.

Le but de l'invention est d'apporter une simplification dans une liaison optique-millimétrique bidirectionnelle afin d'en réduire le coût. Pour l'atteindre, il faut réduire le nombre de composants sophistiqués utilisés et par voie de conséquence le nombre d'interconnexions (optiques notamment). Il faut aussi faciliter ces dernières au moyen d'une technique de fibrage qui ne demande pas une très grande précision. De même, l'invention vise à limiter les contraintes de précision qui s'imposent souvent dans la fabrication de composants rapides par le choix de technologies appropriées.

Ces préoccupations rejoignent dans un certain sens celles qui guident les recherches en composants pour terminal optique dans le cadre de l'introduction de la fibre chez l'abonné (FTTH). Ces recherches ont déjà conduit à un certain nombre de réalisations pouvant être en principe adaptées par l'homme de l'art au domaine de l'optique-radio. Leur examen montre que, même si on réussit cette adaptation, on butera sur un certain nombre d'inconvénients auxquels l'invention se propose d'apporter une solution.

Une première voie, actuellement poursuivie activement pour le réseau d'accès optique, consiste à supprimer la source optique chez l'abonné. Le terminal dans ce cas est constitué d'un modulateur optoélectronique fonctionnant en miroir [17, 18]. Dans ce mode, le miroir reçoit une onde lumineuse émise depuis le poste central à une longueur d'onde identique ou différente de celle de la voie descendante, et la renvoie vers le poste central après y avoir imprimé le signal électrique délivré par l'abonné. On qualifie cette solution de passive. Trois types de composants ont été développés pour remplir cette fonction. D'une part des interféromètres de type Mach-Zehnder en guide ont été réalisés en Niobate de Lithium et expérimentés dans différentes configurations système [19]. D'autre part des modulateurs électroabsorbants à structure verticale, donc plus facilement fibrables que les précédents, ont été mis au point ces dernières années [20, 21, 22]. Il s'agit de structures à semiconducteurs III-V du type cavité Fabry-Pérot asymétrique à accès par la surface, fabriqués par épitaxie sur substrat GaAs ou InP. Enfin des structures à cavité Fabry-Pérot creuse à gap d'air entre les deux miroirs ont été expérimentées dans des configurations système où le débit pour la voie remontante est assez faible [23, 24].

L'utilisation de ces composants dans une transposition radio-optique apporterait des solutions alternatives pour la voie remontante, mais ne répond pas à la préoccupation majeure au plan coût de réunir physiquement les deux voies par la mise en oeuvre d'un composant unique.

Une deuxième approche, également très active pour la distribution optique, exploite des composants dits duplexeurs capables d'assurer simultanément des fonctions d'émission et de réception tout optique.

Là encore il existe deux classes de composants.

La première classe associe, dans un même module et de façon hybride, un laser, un photodétecteur et un filtre isolant l'entrée de la sortie, le tout en structure guidée sur un même substrat [25]. Un dispositif plus intégré et répondant à cette fonctionnalité a été récemment mis au point [26]. Ce dispositif, plus intéressant au plan coût que le précèdent, intègre, sur un même substrat et dans un même guide relié à une fibre unique, un laser et un photodétecteur parfaitement découplés. Il s'agit de structures du type laser DFB multisections dont les technologies sont maintenant bien au point.

L'autre classe de dispositifs, plus avantageuse au plan fibrage, associe dans une même structure verticale obtenue en une seule croissance épitaxiale un miroir Fabry-Pérot du même type que celui décrit précédemment et une photodiode [27]. Ce genre de composant conduit à une architecture centralisée. Malgré cela cette dernière classe de composants, comme la précédente d'ailleurs, une fois étendue au domaine optique-millimétrique, présente les inconvénients que l'on a déjà soulignés. En particulier comme ils utilisent une photodiode pour la fonction de photodétection, ils resteront très limités en niveau de puissance hyperfréquence de sortie.

Le document WO-A-9533317 décrit un dispositif semi-conducteur optoélectronique destiné à servir d'émetteur/récepteur pour l'échange d'informations entre un réseau de communication à fibres optiques et une unité centrale et qui comporte un laser, par exemple de type Fabry-Pérot et une photodiode. Ce document préconise d'utiliser un laser et une photodiode constitués de composants discrets et standards.

Pour pallier aux inconvénients des dispositifs proposés dans l'état de la technique, la présente invention propose un composant intégré verticalement comprenant un oscillateur à pilotage optique, reposant sur un mécanisme de conductance différentielle négative, tel qu'une diode Gunn, une diode IMPATT ou une diode à superréseau, pour assurer la conversion optique-millimétrique sur la voie descendante, et un modulateur à cavité Fabry-Pérot asymétrique pour assurer la fonction de conversion électrique/optique à une autre longueur d'onde sur la voie remontante.

Le terme de pilotage optique s'applique à deux situations respectivement de verrouillage et de mélange qui sont envisageables dans le cadre de la présente invention, dans deux architectures distinctes de système:
- ou bien la porteuse radio est générée par l'oscillateur lui-même. Il agit alors comme mélangeur entre son oscillation propre imposée par les caractéristiques du circuit dans lequel il est inséré, et le signal porteur des données qui lui arrive par voie optique.
- ou bien la porteuse radio est amenée par le réseau de distribution optique et la fréquence de l'oscillateur est asservie et synchronisée en permanence sur la valeur instantanée de la fréquence millimétrique présente sur l'onde lumineuse. On parle alors de verrouillage optique de l'oscillateur. Il s'agit de verrouillage optique direct si le signal optique asservit l'oscillateur lui-même, indirect si l'oscillateur est verrouillé par un signal électrique issu du photodétecteur distinct.

Le dispositif conforme à la présente invention fonctionne alternativement ou simultanément comme oscillateur piloté optiquement pour la voie descendante capable de fournir suffisamment de puissance hyperfréquence et pour la voie remontante comme modulateur miroir piloté par un signal radio reçu par une antenne modulant ainsi une porteuse optique envoyée par un poste central. La voie descendante et la voie remontante peuvent être véhiculées sur deux fibres ou de façon plus économique sur la même fibre.

La présente invention permet ainsi de réduire le nombre de composants nécessaires à la fonction liaison opto-radio bidirectionnelle.

En outre le dispositif conforme à la présente invention est facilement fibrable ce qui constitue un atout considérable pour faire baisser le coût du dispositif d'extrémité.

D'autres caractéristiques, buts et avantages de la présente invention apparaîtront à la lecture de la description détaillée qui va suivre et en regard des dessins annexés, donnés à titre d'exemples non limitatifs et sur lesquels
- la figure 1 représente une vue schématique en coupe verticale d'un composant conforme à un premier mode de réalisation de l'invention,
- la figure 2 représente le spectre de réflectivité de la structure oscillateur à super-réseau et modulateur miroir intégrés de la figure 1,
- la figure 3a représente une simulation du potentiel interne dans une structure d'oscillateur à super-réseau et modulateur miroir intégrés de la figure 1,
- la figure 3b représente la réponse temporelle consécutive à l'excitation du seul oscillateur à super-réseau par une impulsion optique brève (1ps) (la densité des porteurs photocréés est de l'ordre de 10¹⁵cm⁻³),
- la figure 4 représente le schéma en coupe verticale d'une variante de structure à oscillateur à super-réseau et modulateur miroir intégrés comportant quatre contacts,
- la figure 5 représente le schéma en coupe verticale d'une structure oscillateur à super-réseau et miroir Fabry-Perot à cavité creuse intégrés,
- la figure 6 représente une vue de dessus de la partie miroir Fabry-Perot à cavité creuse, et
- la figure 7 représente le spectre de réflectivité de la structure oscillateur à super-réseau et miroir Fabry-Perot à cavité creuse intégrés à la figure 5.

On va maintenant décrire deux exemples de dispositifs, conformes à la présente invention, de transposition bidirectionnelle entre des signaux optiques et des signaux électriques.

### Premier exemple de réalisation

Ce premier exemple de réalisation est constitué d'une structure verticale intégrée comportant un oscillateur à super-réseau 20 et un modulateur à miroir Fabry-Pérot 30.

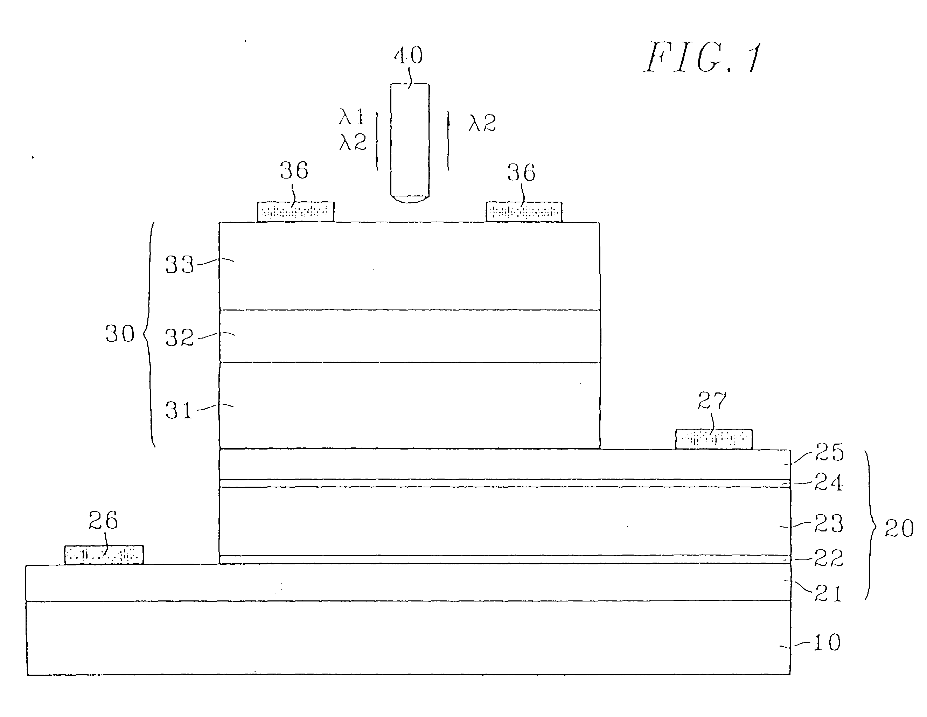

La figure 1 représente le schéma de cette structure qui intègre verticalement par croissance sur un même substrat 10 une section oscillateur 20 surmontée d'une section miroir modulateur 30.

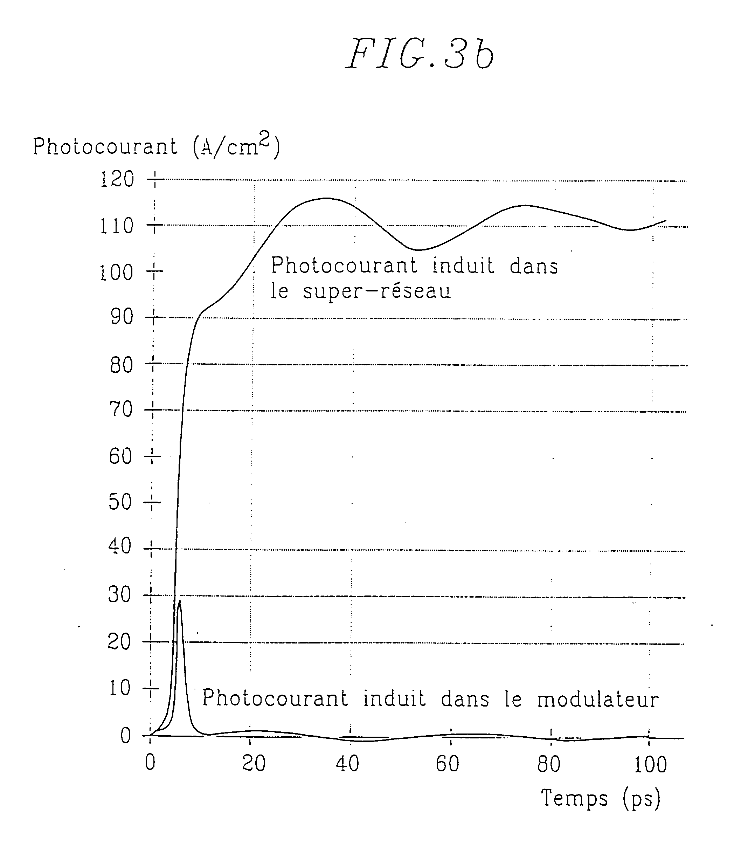

Le composant illustré sur la figure 1, comporte trois électrodes 26, 27, 36, dont une 27 est commune aux deux sections 20, 30. On verra par la suite en regard de la figure 4, que selon une variante, le composant peut comprendre quatre électrodes, 26, 27, 36, 37, pour assurer un meilleur découplage entre les deux sections 20, 30.

Plus précisément, l'oscillateur à super-réseau 20 comprend, déposés successivement sur le substrat semi-isolant 10 :
- une couche 21 de contact type n,
- une couche graduelle 22,
- un super-réseau 23,
- une couche graduelle 24, et
- une couche 25 de contact type n.

Selon la figure 1, une première électrode en métal 26 est déposée sur la première couche de contact 21, tandis qu'une seconde électrode en métal 27 est déposée sur la seconde couche de contact 25. A cet effet la première couche de contact 21 s'étend au delà des couches 22 à 25 qui lui sont superposées pour présenter une portion de surface découverte, accessible à l'électrode 26.

Le modulateur miroir Fabry-Pérot 30 comprend quant à lui, déposés successivement sur la couche de contact 25 :
- un miroir de Bragg type n 31,
- une couche de puits quantiques multiples 32, et
- un miroir de Bragg type p, 33.

L'empilement des couches 31, 32, 33 possède une largeur inférieure à la couche de contact 25 pour libérer une portion de surface de celle-ci accessible à l'électrode 27.

Une électrode annulaire en métal 36 est déposée sur le miroir de Bragg 33.

Du point de vue optique la lumière incidente λ1, λ2 issue d'un poste central est injectée par une fibre optique 40 dans la surface supérieure du miroir de Bragg 33 au centre de l'électrode 36 et la lumière λ2 réfléchie par le modulateur 30 est recueillie dans la même fibre 40. Les longueurs d'ondes de fonctionnement pour lesquelles la structure est conçue sont choisies en fonction de l'architecture du système. Dans une configuration où la liaison fonctionne en duplex intégral la fibre optique 40 injecte au moins deux longueurs d'ondes λ1 et λ2 dans la surface supérieure du modulateur 30. L'une des longueurs d'ondes, λ2 par exemple, est allouée à la voie remontante, l'autre λ1 est allouée à la voie descendante. Le miroir modulateur 30 est actif à λ2 et transparent à λ1, alors que l'oscillateur est photosensible à λ1. Pour éviter d'avoir de la diaphotie entre les deux sections il est préférable d'avoir λ1>λ2.

Le fonctionnement du miroir modulateur 30 est fondé sur l'effet électroabsorbant à λ2, c'est-à-dire les variations de l'absorption optique à cette longueur d'onde induites par les variations de la tension appliquée à cette partie de la structure. On utilise dans la zone active 32 des matériaux semiconducteurs dont la longueur d'onde du bord d'absorption optique est proche de la longueur d'onde de travail du modulateur. L'effet est d'autant plus important si l'on utilise des puits quantiques dans la zone active.

Le modulateur 30 forme ainsi un résonateur Fabry-Pérot asymétrique à multipuits quantiques fonctionnant en mode réflexion. La cavité est conçue d'une part pour avoir une "stop bande" centrée à λ2, et un pic Fabry-Pérot autour de λ2, et d'autre part pour être transparente à λ1.

Le miroir arrière 31 devant présenter une réflectivité élevée, il est constitué d'une alternance périodique de matériaux d'indice de réfraction haut et bas et d'épaisseur quart d'onde (miroir de Bragg).

Le miroir avant 33 peut aussi être un miroir de Bragg de plus faible réflectivité ou simplement être constitué par l'interface semiconducteur-air.

On ajuste le nombre de périodes du ou des miroirs de Bragg 31, 33 pour obtenir une quasi-annulation de la réflectivité à λ2.

Sous l'effet d'une tension, appliquée entre les deux miroirs 31,33, par l'intermédiaire des électrodes 36 et 27, l'absorption ainsi que l'indice de réfraction sont modifiés dans la cavité. Il en résulte un déplacement spectral et une variation de l'intensité du pic Fabry-Pérot de la cavité et donc de la réflectivité de la structure à la longueur d'onde de travail (λ2). Le contraste de réflectivité entre deux états de polarisation dépend fortement de la qualité de la quasi-extinction qu'il est possible d'obtenir dans l'un des états. Ces effets sont bien connus ainsi que la conception de la succession de matériaux nécessaires à leur obtention.

Selon la nature des matériaux constituant le miroir supérieur 33 lorsque c'est un miroir de Bragg, on distingue deux variantes. Dans l'une des structures le miroir 33 peut être constitué de diélectriques isolants (comme par exemple des alternances SiO₂/TiO₂) déposés suivant un procédé classique (évaporation, pulvérisation...). Dans ce cas, le dépôt pour le contact électrique supérieur 36 est réalisé avant le dépôt du miroir 33. Dans l'autre le miroir 33 est formé d'un empilement de matériaux semiconducteurs avec le dopage ad-hoc.

L'oscillateur 20 photosensible à λ1, est constitué d'un superréseau 23 photoabsorbant à λ1. Son fonctionnement est fondé sur le phénomène de "vitesse différentielle négative" lié à la dynamique des porteurs de charge à l'intérieur de la minibande résultant de l'effet superréseau, et dépend du circuit micro-onde ou millimétrique (de son coefficient de surtension en particulier) dans lequel il est inséré. En modifiant par injection optique la densité de charges dans la minibande on verrouille efficacement les oscillations, dont la fréquence est alors assujettie à celle de la sous porteuse radio de la porteuse optique. On pourrait aussi mettre en oeuvre un fonctionnement en oscillateur local et mélangeur, dans le cas où la porteuse radio n'est pas imprimée sur la porteuse optique. L'oscillateur opère alors un mélange entre sa fréquence propre et celle du signal radio imprimé sur la porteuse optique. On obtient avec ce type de composant de bons rendements de conversion optique électrique conduisant à des puissances radio confortables pour attaquer l'antenne. La fréquence de l'oscillateur 20 est déterminée à partir des paramètres du superréseau 23 et grâce à la conception d'un circuit d'accord selon les règles d'ingénierie bien connues.

La structure est de type multicouches. Elle est essentiellement constituée par la succession d'alliages III-V différents.

L'ensemble de la structure est réalisé en une seule opération d'épitaxie sur un substrat semiconducteur. Le composant est ensuite processé par les procédés habituels en technologie des semiconducteurs III-V: lithographie, gravure, dépôt des contacts électriques...

Selon un exemple non limitatif, le dispositif conforme à la présente invention comprend la succession suivante de couches épitaxiées sur un substrat 10 InP à l'accord de maille, pour un fonctionnement au voisinage des longueurs d'ondes de 1.55 µm et 1.3 µm :
- un premier ensemble 21-25 de couches forme l'oscillateur 20 photosensible autour de 1.5 µm.
   1/ une couche 21 de contact en GaInAs de type n (10¹⁹ cm⁻³) d'environ 7000 Ȧ d'épaisseur
   2/ un superréseau 23 InGaAs/InGaAIAs ou autre matériau actif autour de 1,5 µm, dopé de type n de l'ordre de 2 x 10¹⁶ cm⁻³. A titre d'exemple, on pourra choisir le couple de matériaux InGaAs/(InGaAs)_{0.5}(InAIAs)_{0.5}, en prenant des puits de 60 Ȧ, des barrières de 20 Ȧ et une épaisseur totale de 9165 Ȧ, pour un fonctionnement vers 50 GHz.
   3/ une couche 25 de contact en GaInAs de type n (10¹⁹ cm⁻³) d'environ 2000 Ȧ d'épaisseur. On pourra choisir l'épaisseur exacte des couches 21, 23 et 25 pour qu'elles soient des mλ/2 (avec m entier), λ étant la longueur d'onde de référence pour la conception du modulateur 30. La couche 25 doit absorber le résidu de 1.3 µm qui n'aurait pas été absorbé ou réfléchi dans le modulateur 30, pour isoler optiquement l'oscillateur 20 du modulateur 30. Elle pourra faire 1845 Ȧ.
- un second ensemble 31-33 de couches forme le modulateur 30 à 1.3 µm :
4/ un miroir de Bragg 31 réfléchissant dans une bande centrée sur 1.3 µm, ou même un miroir dual réfléchissant dans deux bandes centrées sur 1.52 µm et 1.3 µm, constitué d'une alternance de couches de type n dopées à environ 10¹⁸ cm⁻³, pour la plupart λ/4 à λ = 1.414 µm, par exemple 5 périodes d'une alternance de 10 couches :
- 1034 Ȧ de (InGaAs)_{0.62}(InAlAs)_{0.38}
- 1099 Ȧ de InAlAs
- 1034 Ȧ de (InGaAs)_{0.62}(InAlAs)_{0.38}
- 1099 Ȧ de InAlAs
- 1034 Ȧ de (InGaAs)_{0.62}(InAlAs)0.38
- 2198 Ȧ de InAlAs
- 1034 Ȧ de (InGaAs)_{0.62}(InAlAs)_{0.38}
- 1099 Ȧ de InAlAs
- 1034 Ȧ de (InGaAs)_{0.62}(InAlAs)_{0.38}
- 1099 Ȧ de InAlAs

5/ une couche active 32 absorbante à 1.3 µm non dopée en (InGaAs)_{0.73}(InAlAs)_{0.27} de 11014 Ȧ. Une partie de cette couche peut être dopée p (5 x 10¹⁸ cm⁻³) pour réduire l'épaisseur de la zone non dopée
6/ un miroir de Bragg 33 dopé p (5 x 10¹⁸ cm⁻³) constitué de 2 couches :
   - 1005 Ȧ de InAlAs
   - 938 Ȧ de (InGaAs)_{0.62}(InAIAs)_{0.38}

Les couches de contact 21 et 25 comportent sur une petite partie de leur épaisseur une gradualité de composition 22, 24, destinée à éliminer les discontinuités abruptes de la bande de conduction.

Dans cet exemple, l'électrode métallique 27 déposée sur la couche 25 est commune aux deux sections oscillateur 20 et modulateur 30.

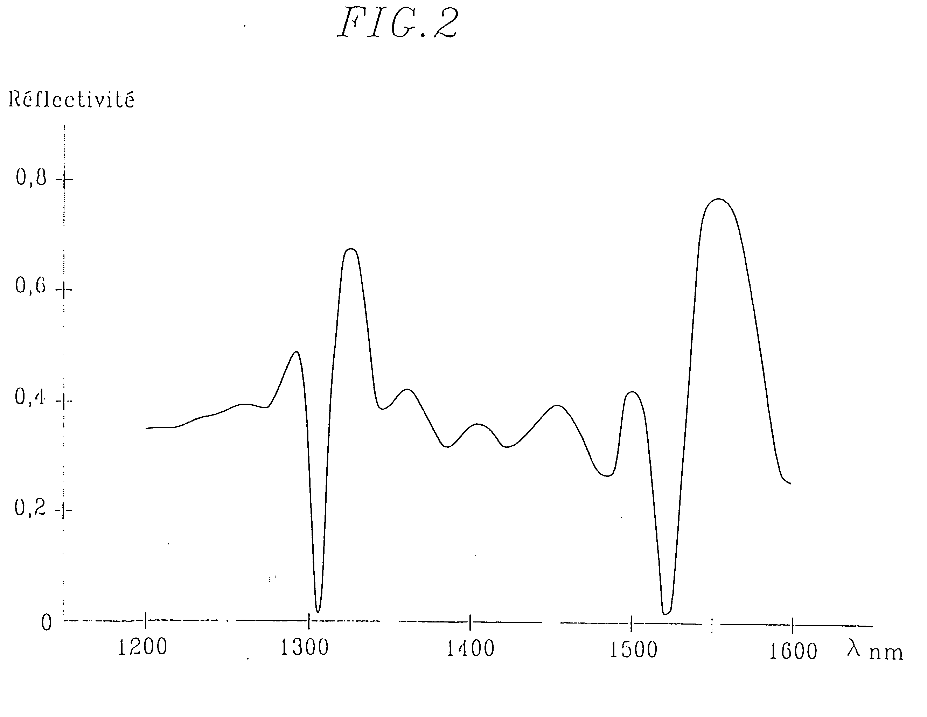

Une modélisation de la réflectivité de l'ensemble des couches sur la plage 1.2-1.6 µm est présentée figure 2. Elle fait apparaître une quasi-annulation de la réflectivité aux longueurs d'ondes λ1 = 1.52 µm et λ2 = 1.3 µm. L'effet électro-absorbant se produit au voisinage de λ1, son influence est faible sur le pic Fabry-Pérot autour de λ2 car cette longueur d'onde est éloignée de la région absorbante et elle n'est l'objet que de faibles variations d'indice.

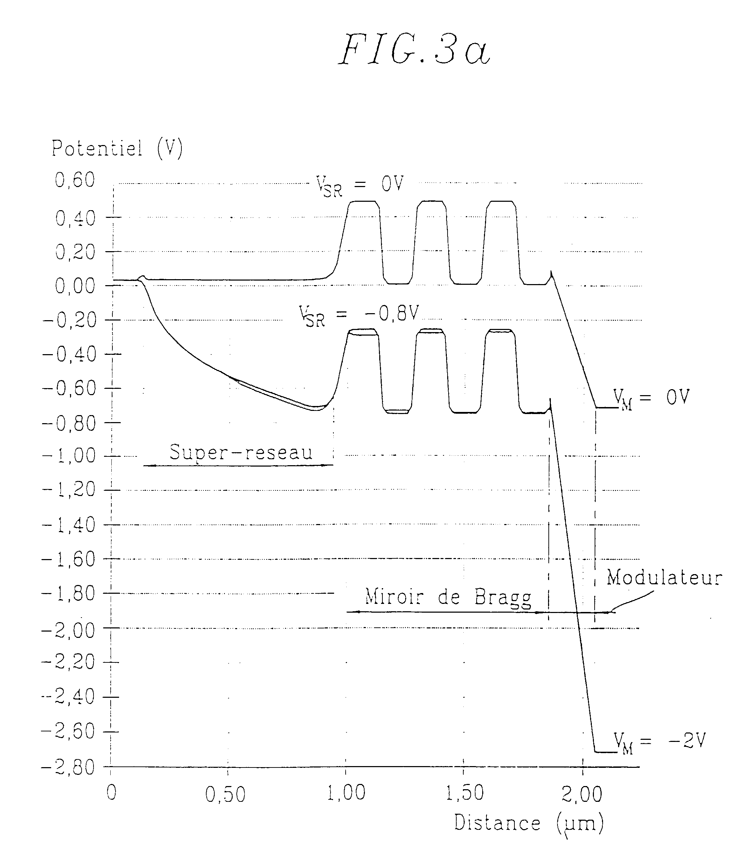

La figure 3 représente le résultat d'une simulation électrique à 2 dimensions pour une structure multicouche semblable à celle décrite ci-dessus d'un point de vue électrique, mais avec un empilement simplifié de couches pour le miroir de Bragg 31 (3 périodes seulement). La figure 3a montre le potentiel dans la structure dans la direction perpendiculaire aux couches, pour différentes coupes successives dans la seconde dimension. Sur la figure 3a, V_{SR} et V_{M} sont les tensions appliquées sur le super-réseau 23 et le modulateur 30. Le potentiel est représenté pour la situation d'équilibre, et lorsque le dispositif est polarisé.

Dans ces conditions de polarisation, l'oscillateur à super-réseau 20 est excité par une impulsion optique brève (1 ps) à 1.52 µm. Le photocourant induit est présenté figure 3b. Il montre une oscillation à une fréquence voisine de 25 GHz dans le super-réseau 23. Un photocourant à la même fréquence est aussi induit dans la section modulateur 30, ce qui indique un certain degré de diaphonie entre les deux voies. Cet effet n'est pas gênant lorsque l'oscillateur 20 est verrouillé par le signal optique : dans ce cas le signal sur la voie descendante est centré sur une fréquence élevé (25 GHz dans l'exemple modélisé), il est en bande de base sur la voie remontante, et il est aisé d'opérer un filtrage entre les deux voies. Il n'en est pas de même lorsque l'oscillateur fonctionne en oscillateur local et que les deux voies sont en bande de base.

Une variante schématisée sur la figure 4, permet d'isoler électriquement les deux sections 20, 30. Elle consiste à remplacer certaines des couches de type n du miroir de Bragg 31 par des couches non dopées ou de type p, par exemple une période (31b) sur les cinq de type p, encadrée par deux périodes de type n (31a et 31c) de chaque côté. Il est alors prévu deux contacts séparés 27 et 37 sur les couches 25 et 31c, comme illustré sur la figure 4, là où il y avait un contact commun selon la figure 1. Ces contacts 27 et 37 sont attribués respectivement à l'oscillateur 20 à super-réseau et au modulateur 30 formant miroir Fabry-Pérot. A cette fin, la couche 31c s'étend au delà des couches superposées 32, 33 pour recevoir le contact 37.

### Deuxième exemple de réalisation

Selon ce deuxième exemple de réalisation, la structure verticale intégrée comporte un miroir Fabry-Pérot à cavité creuse 30 et un oscillateur à super-réseau 20.

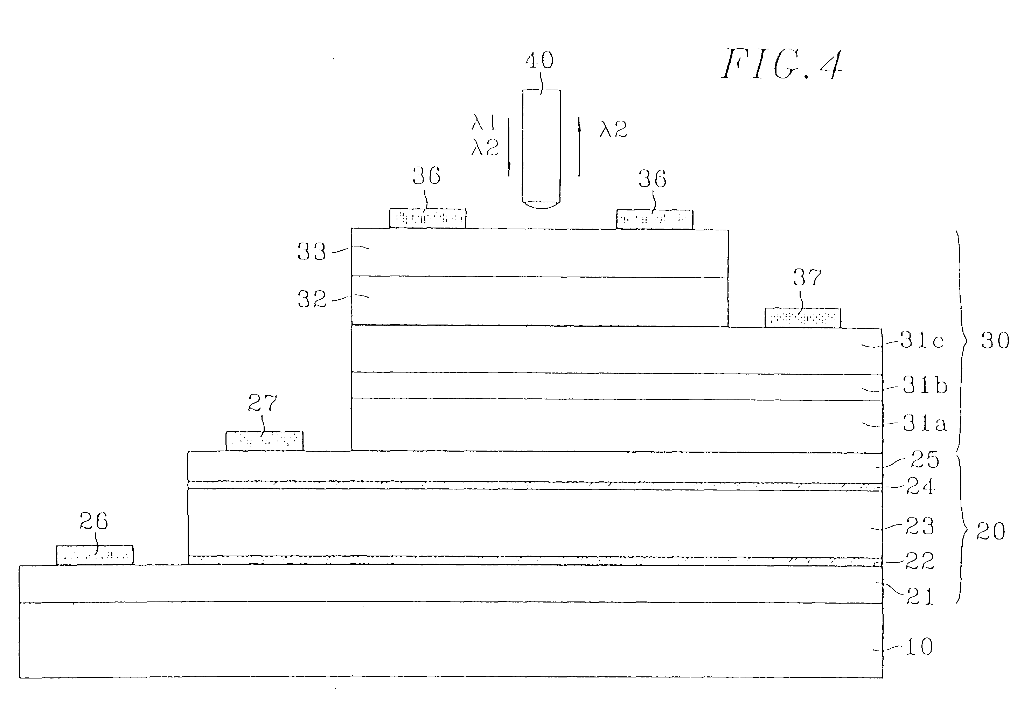

La figure 5 représente le schéma de cette structure.

Celle-ci a beaucoup d'éléments communs avec la précédente.

On retrouve en particulier sur la figure 5, un oscillateur à super-réseau 20 comprenant déposés successivement sur un substrat semi-isolant 10 :
- une couche de contact type n 21,
- une couche graduelle 22,
- un super-réseau 23,
- une couche graduelle 24, et
- une couche de contact type n 25,
ainsi que deux contacts métalliques 26, 27 déposés respectivement sur la couche de contact 21 et sur la couche de contact 25, comme décrit précédemment en regard des figures 1 à 4.

En revanche selon le mode de réalisation de la figure 5, le modulateur 30 est formé d'une cavité Fabry-Pérot creuse. C'est à dire que ce modulateur 30 comprend deux miroirs 31, 33 séparés par une couche d'air 38.

Le miroir supérieur 33 est suspendu par une couche entretoise 32 au-dessus du miroir inférieur 31 qui surmonte l'oscillateur 20 à super-réseau.

Ce type de réalisation peut être obtenu en deux étapes de technologie : gravure du motif dans le miroir supérieur 33 et attaque chimique de la couche 32 enserrée par croissance entre les deux miroirs 31, 33 de la structure 30. Cette couche 32 est conçue pour faciliter ce traitement.

Le miroir supérieur 33 se comporte alors comme une membrane déformable. L'épaisseur de la cavité 38 est variable et peut être modulée sous l'effet d'une tension appliquée entre la membrane 33 et le miroir fixe inférieur 31 grâce aux électrodes 37, 36 déposées respectivement sur les couches 31c et 33 de miroir.

La résonance de la cavité 38 est ainsi modulable et donc à une longueur d'onde fixe de fonctionnement la réflectivité de la structure suit la même modulation.

Selon un exemple non limitatif, le dispositif conforme à la présente invention illustré sur la figure 5 comprend la succession suivante de couches épitaxiées sur un substrat 10 InP :
- un premier ensemble 21-25 de couches forme l'oscillateur 20 photosensible autour de 1.5 µm :
   1/ une couche 21 de contact en GalnAs de type n (10¹⁹ cm⁻³) d'environ 7000 Ȧ d'épaisseur.
   2/ un super-réseau 23 InGaAs/InGaAlAS ou autre matériau actif autour de 1,5 µm, dopé de type n de l'ordre de 2 x 10¹⁶ cm⁻³. A titre d'exemple, on pourra choisir le couple de matériaux InGaAs/(InGaAs)_{0.5}(InAlAs)_{0.5}, en prenant des puits de 60 Ȧ, des barrières de 20 Ȧ et une épaisseur totale de 9165 Ȧ, pour un fonctionnement vers 50 GHz.
   3/ une couche 25 de contact en GalnAs de type n (10¹⁹ cm⁻³) d'environ 2000 Ȧ d'épaisseur. On pourra choisir l'épaisseur exacte des couches 21, 23 et 25 pour qu'elles soient des mλ/2 (m entier), λ étant la longueur d'onde de référence pour la conception du modulateur. La couche 25 doit absorber le résidu de 1.3 µm qui n'aurait pas été absorbé ou réfléchi dans le modulateur 30, pour isoler optiquement l'oscillateur 20 du modulateur 30. Elle pourra faire 1845 Ȧ.
- second ensemble 31-33 de couches forme le modulateur 30 à 1.3 µm :
   4/ un miroir de Bragg 31 réfléchissant dans une bande centrée sur 1.3 µm, par exemple 26 périodes d'une alternance de 2 couches :
      - 938 Ȧ de (InGaAs)_{0.62}(InAlAs)_{0.38}
      - 1005 Ȧ de InAlAs
   5/ une couche 32 permettant une attaque chimique sélective, par exemple InP
   6/ un miroir de Bragg 33 dopé type p (5 x 10¹⁸ cm⁻³) constitué de 2 couches:
      - 1005 Ȧ de InAlAs
      - 938 Ȧ de (InGaAs)_{0.62}(InAlAs)_{0.38}

Là encore, les couches de contact 21, 25 comportent sur une petite partie de leur épaisseur, une gradualité de composition 22, 24, destinée à éliminer les discontinuités abruptes de la bande de conduction.

La succession des couches est la même que dans le cas précédent jusqu'à la couche 25. La couche 31 est un miroir de Bragg simple à 1.3 µm. Au-delà, la couche 32 doit être retirée par attaque chimique. Son épaisseur est un multiple de 0.65 µm. Les couches 33 sont un miroir de Bragg.

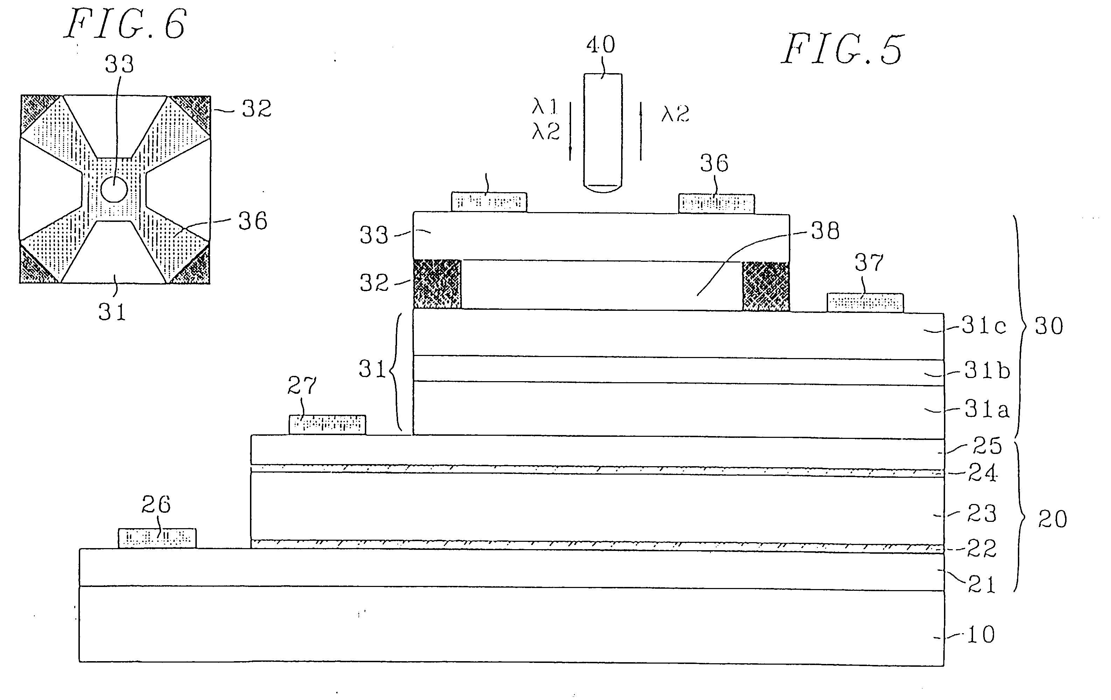

La figure 6 représente une vue de dessus de la structure du modulateur.

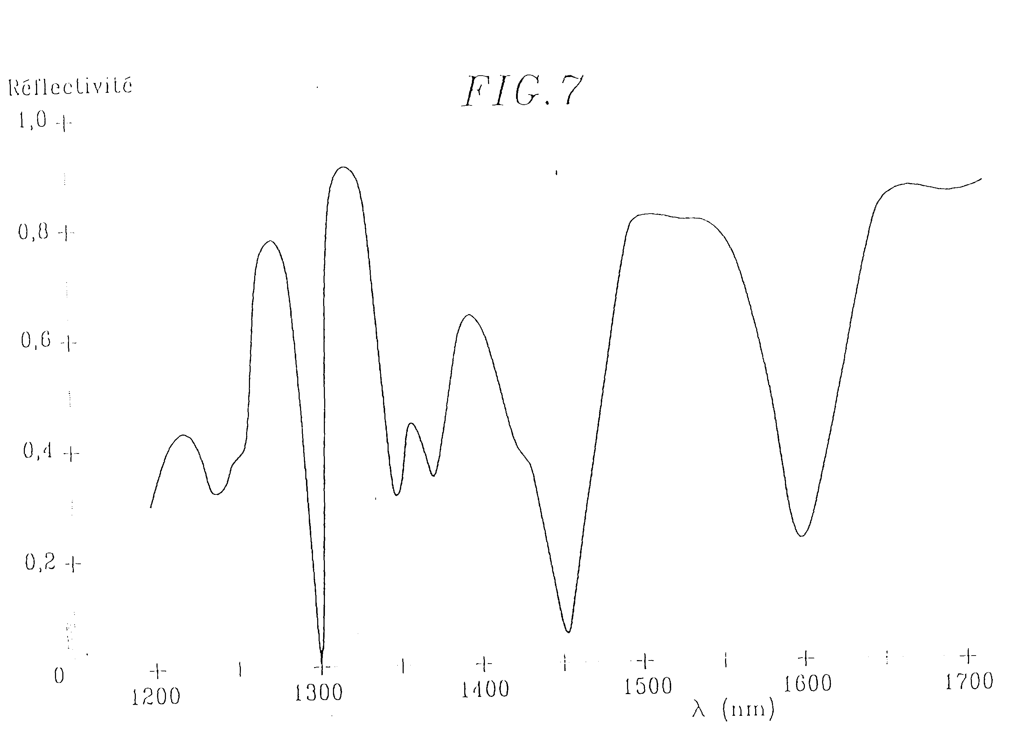

La figure 7 présente une modélisation de la réflectivité du dispositif ainsi obtenu. Sa transmission est assez faible entre 1.5 et 1.54 µm, mais varie très peu et ne dépend donc pas de la tension appliquée sur le modulateur 30.

Bien entendu la présente invention n'est pas limitée aux modes de réalisation particuliers qui viennent d'être décrits mais s'étend à toute variante conforme à son esprit.

La fibre 40 peut acheminer les signaux optiques λ1, λ2 soit par le dessus de la structure auquel cas l'oscillateur 20 est déposé par croissance épitaxiale avant le modulateur 30, soit par le dessous de la structure, à travers le substrat 10, auquel cas le modulateur 30 est déposé par croissance épitaxiale avant l'oscillateur 20. Cette dernière configuration permet de réduire la surface de l'oscillateur, ce qui peut se révéler intéressant pour diminuer sa capacité et atteindre les fréquences les plus hautes du domaine millimétrique.

Selon une variante, le dispositif conforme à la présente invention fonctionne avec pilotage optique indirect de l'oscillateur 20. Dans ce mode, la section modulateur 30 est utilisée à la fois et alternativement comme modulateur miroir pour la voie remontante et comme photodétecteur pour la voie descendante. Un modulateur électro-absorbant 30 délivre en effet un photocourant lorsqu'il est absorbant. Le signal photodétecté sert alors à piloter électriquement la section oscillateur 20.

A l'alternat, le duplexeur n'est plus utilisé en tant que tel. La photosensibilité de l'oscillateur 20 et la transparence du modulateur 20 ne sont pas requises, et il n'est pas nécessaire de faire appel à deux longueurs d'ondes différentes. Si c'est cependant le cas, il est plutôt favorable de choisir pour la photodétection une longueur d'onde un peu plus courte que la longueur d'onde de travail du modulateur 30 (par exemple inférieure à 1.28 µm pour le modulateur 30 dont la réflectivité est représentée sur la figure 2). Ce mode permet d'enrichir les possibilités et la souplesse d'utilisation du composant.

L'invention s'applique a toute architecture de système de communication faisant appel à un interface bidirectionnel de transposition entre des signaux optiques et des signaux électriques, quelle que soit l'approche envisagée selon que le signal optique comporte ou non la porteuse radio.

### REFERENCES

[ 1 ] Fiber Optic Millimeter-Wave Subcarier-Transmission Links for Personal Radio Communication Systems H. OGAWA and D. POLIFKO IEEE MTT-S Digest p. 555 (1992)
[ 2 ] The Merging of Photonic and Microwave Technologies D. POLIFKO and H. OGAWA Microwave Journal p. 75 (March 1992)
[ 3 ] RACE R2005: microwave optical duplex antenna link J.J. O'RELLY, P.M. LANE, M. H. CAPSTICK, H.M SALGADO, R. HEIDEMANN, R. HOFSTETTER and H. SCHMUCK IEE PROCEEDINGS-J, Vol. 140, N°. 6, pp. 385 (Décembre 1993)
[ 4 ] Proposal of fiber and radio extension link for future personal communications S. KOMAKI, K. TUKAMOTO, S. HARA, and N. MORINAGA Microwave and Optical Technology Letters 1993, Vol. 6, N° 1, pp. 55
[ 5 ] Fiber-optic link architecture for microwave subcarrier transmission and reception G.K. GOPALAKRISHNAN, K.J. WILLLAMS, R.P. MOELLER, W.K. BURNS and R.D. ESMAN Electron. Lett. 1995, 31, (20), pp. 1764
[ 6 ] Millimeter-wave (39 GHz) fibre-wireless transmission of broadband multichannel compressed digital vidéo J. PARK and K.Y. LAU Electron. Lett. 1996, 32,(5), pp. 474
[ 7 ] Comparison of fibre and coaxial link for access network in microcellular PCS H. JUNG and O.K. TONGUZ Electron. Lett. 1996, 32,(5), pp. 425
[ 8 ] Zero-bias edge-coupled InGaAs photodiodes in millimetre radio-fibre systems D. WAKE, N.G. WALKER and I.C. SMITH
[ 9 ] Optically-biased, edge-coupled InP/InGaAs heterojonction phototransitors D. WAKE, D.J. NEWSON, M.J. HARLOW and I.D. HENNING Electron. Lett. 1993, 29,(25), pp. 2217
[ 10 ] Fiber optic methods for injection locked oscillators S.E. LIPSKY and A.S. DARYOUSH Microwave Journal p. 80 (January 1992)
[ 11 ] 60 GHz sources using optically driven heterojonction bipolar transistors D.C. SCOTT, D.V. PLANT and H.R FETTERMAN Appl. Phys. Lett. 61 (1) pp. 1(1992)
[ 12 ] Ka-Band FM Video Subcarrier Transmission Using Monolithic lntegrated HEMT Phocodetector H. OGAWA, S. BANBA, H. KAMITSUNA and D. POLIFKO Fourth Optoelectronics Conference (OEC 92) Techical Digest p 22 (July 1992)
[ 13 ] W-Band Optically controlled Gunn Subharmnonic Oscillator X.W. ZHU, Y.Y. CHEN and S.F. LI EEE MTT6S DIGEST pp.365 (1992)
[ 14 ] Optical injection locking of microstrip MESFET oscillator using heterojonction phototransistors D. SOMMER, N.J. GOMES and D. WAKE Electron. Lett. 1994, 30, (13), pp. 1097
[ 15 ] Direct Optical Injection Locking of 20 GHz Superlattice Oscillators J. F. CADIOU, J GUENA, E. PENARD, P. LEGAUD, C. MINOT, J.F. PALMIER, H. LE PERSON and J. C. HARMAND Electron. Lett. 1994, 30, (20), pp. 1690
[ 16 ] System Design for Radio Over Fiber in the Millimeter Wave Range J. F. CADIOU, E. PENARD, P. LEGAUD, J. GUENA, F. DEVAUX, C. MINOT, J.F. PALMIER, D. MATHOORASING and C. KAZMIERSKI. EEE MTT-S OPTICAL MICROWAVE INTERACTIONS pp. 185 (1994)
[ 17 ] LOCNET: A Fiber in the Loop System With No light Source at the Subscriber End L. ALTWEGG, A. AZIZI, P. VOGEL, Y. WANG et F. WYLER J. Lightwave Technol. vol. 12, pp. 535, 1994
[ 18 ] Simultaneous Two-Way Ligth Intensity Modulation Optical Transmission at the Same Bit Rate Without a Light Source in the Subscriber Terminal C. GIBASSER, J. ABIVEN, C. RAMUS, F. HUET et J. SAULNIER Electron. Lett. 1994, 30, (13), pp. 1162
[ 19 ] A 1,3 µm LiNbO3 reflective modulator, hybridised with a photoreceiver, for bidirectional full-duplex transmission C. RAMUS, F. HUET, J. SAULNIER, C. GIBASSIER, J. ABIVEN et S. DUREL ECIO'95: 7th european conference on integrated optics, Delft, NLD (03-06/04/95)
[ 20 ] Fabry-Perot reflectance modulator for 1.3 µm from (InAIGa)As materials grown at low temperature I. J. FRITZ, B. E. HAMMONS, A. J. HOWARD, T. M. BRENNAN et J. A. OLSEN Appl. Phys.Lett. 62, 919 (1993)
[ 21 ] All-optical, high contrast GaInAIAs multiple quantum well asymetric reflection modulator at 1.3 pm M. F. KROL, T. OHTSUKI, G. KHITROVA. R. K. BONCEK, B. P. McGENNIS, H. M. GIBBS ET N. PEYGHAMBARIAN Appl. Phys.Lett. 62, 1550 (1993)
[ 22 ] 1.3 µm electroabsorption reflection modulators on GaAs S. M. LORD, J.A. TREZA, M. C. LARSON, B. PEZESHKI et J. S. HARRIS Appl. Phys.Lett. 63, 806(1993)
[ 23 ] Widely and Continuously Tunable Micromachined Resonant Cavity Detector with Wavelength Traking M. S. WU, E. C. VAIL, G. S. LI, W. YLEN et C. J. CHANG-HASNAIN IEEE Photonics Technol. Lett.8, 1, 98 (1996)
[ 24 ] Continuously tunable micromachined vertical cavity surface emitting laser with 18 nm wavelength range M. C. LARSON, A. R. MASSENGALE et J. S. HARRIS Electron. Lett. 1996, 32,(5), pp. 330
[ 25 ] Polarization-independent filtering in a grating-assisted horizontal directional coupler S. FRANCOIS, S. FOUCHET, N. BOUADMA, A. OUGAZZADEN, M. CARRE, G. HERVE GRUYER, M. FILOCHE et A. CARENCO IEEE Photonics Technol. Lett.7, 7, 780 (1995)
[ 26 ] Full-duplex opération of an in-line transceiver emitting at 1.3 µm and receiving at 1.5ym N. NAKAJIMA, J. CHARIL, D. ROBEIN, A. GLOUKHIAN, B. PIRRE, J. LANDREAU, S. GROMAIRE et A. LEROY Electron. Lett. 1996, 32,(5), pp. 473
[ 27 ] Simultaneous bidirectional signalling using multiquantum well reflective modulator/detector C. J. G. KIRKBY, R. M. ASH, A. J. MOSELEY et A. C. CARTER Electron. Lett. 1996, 27,(25), pp. 2374.

## Revendications

1. Dispositif bidirectionnel de transposition entre des signaux optiques et des signaux électriques, pour système de communication, comprenant un moyen convertisseur électrique/optique à commande électrique type Fabry-Pérot et un moyen convertisseur optique/électrique caractérisé par le fait qu'il comporte un composant intégré verticalement comprenant un oscillateur à pilotage optique (20), reposant sur un mécanisme de conductance différentielle négative, pour assurer la conversion optique-millimétrique sur la voie descendante, et un modulateur à cavité Fabry-Pérot asymétrique (30) pour assurer la fonction de conversion électrique/optique sur la voie remontante.

2. Dispositif selon la revendication 1, caractérisé par le fait que l'oscillateur à pilotage optique (20) est choisi dans le groupe comprenant :
les diodes GUNN, les diodes IMPATT et les diodes super-réseaux.

3. Dispositif selon l'une des revendications 1 ou 2, caractérisé par le fait que le modulateur (30) remplit une fonction miroir piloté par un signal radio reçu par une antenne modulant une porteuse optique envoyée par un poste central.

4. Dispositif selon l'une des revendications 1 à 3, caractérisé par le fait que l'un au moins des miroirs (31, 33) de la cavité Fabry-Pérot (30) est réalisé à base de couches semi-conductrices.

5. Dispositif selon l'une des revendications 1 à 4, caractérisé par le fait que le modulateur (30) est transparent à la longueur d'onde (λ1) à laquelle l'oscillateur (20) est actif.

6. Dispositif selon l'une des revendications 1 à 5, caractérisé par le fait qu'il comprend au moins une couche de contact (25) entre l'oscillateur à pilotage optique (20) et le modulateur à cavité Fabry-Pérot (30), transparente à la longueur d'onde à laquelle est sensible l'oscillateur (20) et adaptée pour ne pas introduire de couplage électrique ou optique entre l'oscillateur (20) et le modulateur (30).

7. Dispositif selon l'une des revendications 1 à 6, caractérisé par le fait qu'il comprend en outre une fibre optique unique (40) adaptée pour acheminer vers le composant deux longueurs d'onde (λ1, λ2) : une première longueur d'onde (λ1) à laquelle le modulateur (30) est transparent et l'oscillateur (20) est sensible et une deuxième longueur d'onde (λ2) à laquelle fonctionne le modulateur (λ2).

8. Dispositif selon la revendication 7, caractérisé par le fait que la fibre optique (40) achemine le signal optique sur le dessus de la structure, et l'oscillateur (20) est déposé par croissance épitaxiale avant le modulateur (30).

9. Dispositif selon la revendication 7, caractérisé par le fait que la fibre optique (40) achemine le signal optique sous la structure, à travers un substrat (10) et l'oscillateur (20) est déposé par croissance épitaxiale après le modulateur (30).

10. Dispositif selon l'une des revendications 1 à 9, caractérisé par le fait que le modulateur (30) est adapté pour réfléchir une longueur d'onde (λ2) plus courte que la longueur d'onde (λ1) à laquelle est sensible l'oscillateur (20).

11. Dispositif selon l'une des revendications 1 à 10, caractérisé par le fait que l'oscillateur (40) composant deux couches de contact (21, 25) qui encadrent un super-réseau (23).

12. Dispositif selon la revendication 11, caractérisé par le fait que les deux couches de contact (21, 25) comportent sur une partie de leur épaisseur adjacente au super-réseau (20) une gradualité de composition (22,24).

13. Dispositif selon l'une des revendications 1 à 12, caractérisé par le fait au l'oscillateur (20) comprend :
- une couche (21) de contact en GaInAs de type n,
- un super-réseau (23),
- une couche (25) de contact en GaInAs de type n.

14. Dispositif selon la revendication 13, caractérisé par le fait que la couche active (23) est en InGaAs/InGaAIAs.

15. Dispositif selon la revendication 13, caractérisé par le fait que la couche active (23) est en InGaAs/(InGaAs)_{0.5}(InAIAS)_{0.5}.

16. Dispositif selon l'une des revendications 1 à 15, caractérisé par !e fait que le modulateur (30) est un modulateur miroir Fabry-Pérot qui comprend un premier miroir arrière (31), une couche active (32) et un second miroir avant (33).

17. Dispositif selon la revendication 16, caractérisé par le fait que la couche active (32) est une couche de puits quantiques multiples.

18. Dispositif selon l'une des revendications 1 à 15, caractérisé par le fait que le modulateur (30) est un miroir Fabry-Pérot à cavité creuse.

19. Dispositif selon la revendication 18, caractérisé par le fait que le modulateur (30) comprend un premier miroir arrière (31), une couche d'air (32) et un second miroir avant (33).

20. Dispositif selon l'une des revendications 16 à 19, caractérisé par le fait que le miroir arrière (31) du modulateur (30) est un miroir de Bragg.

21. Dispositif selon l'une des revendications 16 à 20, caractérisé par le fait que le miroir arrière (31) du modulateur (30) est constitué d'une alternance périodique de matériaux d'indice de réfraction haut et bas et d'épaisseur quart d'onde.

22. Dispositif selon l'une des revendications 16 à 21, caractérisé par le fait que le miroir arrière (31) du modulateur (30) est constitué par un empilement de matériaux semi-conducteurs.

23. Dispositif selon l'une des revendications 16 à 22, caractérisé par le fait que le premier miroir (31) du modulateur (30) est formé d'une alternance de couches en (InGaAs)_{0.62}(InAIAs)_{0.38} et InAlAs.

24. Dispositif selon l'une des revendications 16 à 23, caractérisé par le fait que le miroir avant (33) du modulateur (30) est un miroir de Bragg.

25. Dispositif selon l'une des revendications 16 a 23, caractérisé par le fait que le miroir avant (33) du modulateur (30) est constitué par l'interface entre une couche de matériau semi-conducteur et l'air.

26. Dispositif selon l'une des revendications 16 à 23, caractérisé par le fait que le miroir avant (33) du modulateur (30) est constitué par un empilement de diélectriques isolants.

27. Dispositif selon l'une des revendications 16 à 26, caractérisé par le fait que la couche active (32) du modulateur (30) est formée de (InGaAs)_{0.73}(InAIAs)_{0.27}.

28. Dispositif selon la revendication 27, caractérisé par le fait qu'une partie de la couche active (32) est dopée p.

29. Dispositif selon l'une des revendications 16 à 28, caractérisé par le fait que le second miroir (33) est constitué d'une alternance de couches de InAIAs et de (InGaAs)_{0.62}(InAIAs)_{0.38}.

30. Dispositif selon l'une des revendications 18 ou 19, caractérisé par le fait que la couche gravée (33) du modulateur (30), intercalée entre deux miroirs (31, 33) est formée d'InP.

31. Dispositif selon l'une des revendications 1 à 30, caractérisé par le fait qu'il comprend trois électrodes (26, 27, 36 : une électrode déposée sur une couche de contact (21) de l'oscillateur (20), une électrode (36) déposée sur le modulateur (30) et une électrode (27) commune à l'oscillateur (20) et au modulateur (30).

32. Dispositif selon l'une des revendications 1 à 30, caractérisé par le fait qu'il comprend quatre électrodes (26, 27, 37, 36) : deux électrodes (26, 27) déposées sur des couches de contact de l'oscillateur (20) et deux électrodes (36, 37) déposées sur le modulateur (30).

33. Dispositif selon l'une des revendications 1 à 32, caractérisé par le fait que l'oscillateur (20) génère lui-même la porteuse radio et agit comme mélangeur entre son oscillation propre imposée par les caractéristiques du circuit dans lequel il est inséré, et le signal porteur des données qui lui arrive par voie optique.

34. Dispositif selon l'une des revendications 1 à 32, caractérisé par le fait que l'oscillateur est à verrouillage optique, la porteuse radio étant amenée par le réseau de distribution optique et la fréquence de l'oscillateur étant asservie et synchronisée en permanence sur la valeur instantanée de la fréquence millimétrique présente sur l'onde lumineuse.

35. Dispositif selon la revendication 34, caractérisé par le fait que l'oscillateur (20) est à verrouillage direct, le signal optique asservissant l'oscillateur lui-même.

36. Dispositif selon la revendication 34, caractérisé par le fait que l'oscillateur est à verrouillage indirect, ledit oscillateur (20) étant verrouillé par un signal électrique issu d'un photodétecteur distinct (30).

37. Dispositif selon la revendication 36, caractérisé par le fait que l'oscillatur (20) est verrouillé par un signal électrique issu du modulateur (30) formant photodétecteur.

38. Système de communication comprenant un réseau de distribution à fibre optique entre au moins un poste central et une pluralité de stations équipées chacune d'un émetteur radio formant un réseau d'accès par radio en bout de fibre optique, caractérisé par le fait qu'il comprend un dispositif de transposition bidirectionnelle conforme à l'une des revendications 1 à 37 dans chacune des stations.

## Claims

1. A device for both-way transposition between optical signals and electrical signals, for a communications system, said device comprising Fabry-Pérot type electrically controlled electical-to-optical converter means and optical-to-electrical converter means, said device being characterized by the fact that it comprises a vertically integrated component comprising an optically driven oscillator (20) based on a negative differential conductance mechanism, for performing optical-to-millimetric conversion on the down path, and an asymmetric Fabry-Perot cavity modulator (30) for performing the electrical-to-optical conversion function on the up path.

2. A device according to claim 1, characterized by the fact that the optically driven oscillator (20) is chosen from the group comprising: Gunn diodes, IMPATT diodes, and superlattice diodes.

3. A device according to claim 1 or 2, characterized by the fact that the modulator (30) serves as a mirror driven by a radio signal received by an antenna modulating an optical carrier sent by an exchange.

4. A device according to any one of claims 1 to 3, characterized by the fact that at least one of the mirrors (31, 33) of the Fabry-Perot cavity (30) is based on semiconductor layers.

5. A device according to any one of claims 1 to 4, characterized by the fact that the modulator (30) is transparent to the wavelength (λ1) at which the oscillator (20) is active.

6. A device according to any one of claims 1 to 5, characterized by the fact that it includes at least one contact layer (25) between the optically driven oscillator (20) and the Fabry-Perot cavity modulator (30), which contact layer is transparent to the wavelength to which the oscillator (20) is sensitive, and organized so as not to impart electrical or optical coupling between the oscillator (20) and the modulator (30).

7. A device according to any one of claims 1 to 6, characterized by the fact that it further includes a single optical fiber (40) organized to convey to the component two wavelengths (λ1, λ2): namely a first wavelength (λ1) to which the modulator (30) is transparent and the oscillator (20) is sensitive, and a second wavelength (λ2) at which the modulator (30) operates.

8. A device according to claim 7, characterized by the fact that the optical fiber (40) conveys the optical signal to the top of the structure, and the oscillator (20) is deposited by epitaxial growth prior to the modulator (30).

9. A device according to claim 7, characterized by the fact that the optical fiber (40) conveys the optical signal to the bottom of the structure, through a substrate (10), and the oscillator (20) is deposited by epitaxial growth after the modulator (30).

10. A device according to any one of claims 1 to 9, characterized by the fact that the modulator (30) is organized to reflect a wavelength (λ2) that is shorter than the wavelength (λ1) to which the oscillator (20) is sensitive.

11. A device according to any one of claims 1 to 10, characterized by the fact that the oscillator (20) comprises two contact layers (21, 25) flanking a superlattice (23).

12. A device according to claim 11, characterized by the fact that each of the two contact layers (21, 25) has a gradually changing composition over a portion (22, 24) of its thickness adjacent to the superlattice (23).

13. A device according to any one of claims 1 to 12, characterized by the fact that the oscillator (20) comprises:
an n-type GalnAs contact layer (21);
a superlattice (23); and
an n-type GalnAs contact layer (25).

14. A device according to claim 13, characterized by the fact that the active layer (23) is made of InGaAs/InGaAIAs.

15. A device according to claim 13, characterized by the fact that the active layer (23) is made of InGaAs/(InGaAs)_{0.5}(InAIAs)_{0.5}.

16. A device according to any one of claims 1 to 15, characterized by the fact that the modulator (30) is a Fabry-Perot mirror modulator which comprises a back first mirror (31), an active layer (32), and a front second mirror (33).

17. A device according to claim 16, characterized by the fact that the active layer (32) is a multiple quantum well layer.

18. A device according to any one of claims 1 to 15, characterized by the fact that the modulator (30) is a hollow-cavity Fabry-Perot mirror.

19. A device according to claim 18, characterized by the fact that the modulator (30) comprises a back first mirror (31), a layer of air (32) and a front second mirror (33).

20. A device according to any one of claims 16 to 19, characterized by the fact that the back mirror (31) of the modulator (30) is a Bragg mirror.

21. A device according to any one of claims 16 to 20, characterized by the fact that the back mirror (31) of the modulator (30) is constituted by a periodically alternating succession of materials of high refractive index and of low refractive index, and of quarter-wave thickness.

22. A device according to any one of claims 16 to 21, characterized by the fact that back mirror (31) of the modulator (30) is constituted by a stack of semiconductor materials.

23. A device according to any one of claims 16 to 22, characterized by the fact that the first mirror (31) of the modulator (30) is formed of an alternating succession of layers made of (InGaAs)_{0.62}(InAIAs)_{0.38} and of InAIAs.

24. A device according to any one of claims 16 to 23, characterized by the fact that front mirror (33) of the modulator (30) is a Bragg mirror.

25. A device according to any one of claims 16 to 23, characterized by the fact that the front mirror (33) of the modulator (30) is constituted by the interface between air and a layer of semiconductor material.

26. A device according to any one of claims 16 to 23, characterized by the fact that the front mirror (33) of the modulator (30) is constituted by a stack of insulating dielectrics.

27. A device according to any one of claims 16 to 26, characterized by the fact that the active layer (32) of the modulator (30) is formed of (InGaAs)_{0.73}(InAIAs)_{0.27}.

28. A device according to claim 27, characterized by the fact that a portion of the active layer (32) is p-doped.

29. A device according to any one of claims 16 to 28, characterized by the fact that the second mirror is constituted by an alternating succession of layers of InAIAs and of (InGaAs)_{0.62}(InAIAs)_{0.38}.

30. A device according to claim 18 or 19, characterized by the fact that the etched layer (33) of the modulator (30) interposed between two mirrors (31, 33) is formed of InP.

31. A device according to any one of claims 1 to 30, characterized by the fact that it includes three electrodes (26, 27, 36: an electrode deposited on a contact layer (21) of the oscillator (20), an electrode (36) deposited on the modulator (30), and an electrode (27) that is common to the oscillator (20) and to the modulator (30).

32. A device according to any one of claims 1 to 30, characterized by the fact that it includes four electrodes (26, 27, 37, 36): two electrodes (26, 27) deposited on respective contact layers of the oscillator (20), and two electrodes (36, 37) deposited on the modulator (30).

33. A device according to any one of claims to 32, characterized by the fact that the oscillator (20) itself generates the radio carrier and acts as a mixer for mixing its characteristic oscillation, imposed by the characteristics of the circuit in which it is inserted, with the data-carrying signal that arrives optically.

34. A device according to any one of claims 1 to 32, characterized by the fact that the oscillator is an optically locked oscillator, the radio carrier being conveyed by the optical distribution network, and the frequency of the oscillator being servo-controlled and synchronized continuously on the instantaneous value of the millimetric frequency present on the light wave.

35. A device according to claim 34, characterized by the fact that the oscillator (20) is locked directly, the optical signal servo-controlling the oscillator itself.

36. A device according to claim 34, characterized by the fact that the oscillator is locked indirectly, said oscillator (20) being locked by an electrical signal output by a distinct photodetector (30).

37. A device according to claim 36, characterized by the fact that the oscillator (20) is locked by an electrical signal output by the photodetector-forming modulator (30).

38. A communications system comprising an optical fiber distribution network between at least one exchange and a plurality of stations each of which is equipped with a radio transmitter forming a radio access network at the end of the optical fiber network, said communications system being characterized by the fact that it includes a both-way transposition device according to any one of claims 1 to 37 in each of the stations.

## Patentansprüche

1. Bidirektionale Vorrichtung zur Signalumsetzung zwischen optischen und elektrischen Signalen für ein Nachrichtenverbindungssystem mit einer elektrisch gesteuerten elektrisch/optischen Wandlereinrichtung vom Fabry-Pérot Typ und einer optisch/elektrischen Wandlereinrichtung, dadurch gekennzeichnet, daß sie ein vertikal integriertes Bauelement umfaßt, das einem optisch gesteuerten Oszillator (20), der auf einem Mechanismus eines negativen differentiellen Leitwerts beruht, um für die millimeteroptische Umwandlung auf dem absteigenden Weg zu sorgen, und einen asymmetrischen Fabry-Pérot Hohlraummodulator (30) aufweist, um für die elektrisch/optische Umwandlungsfunktion auf dem ansteigenden Weg zu sorgen.

2. Vorrichtung nach Anspruch 1, dadurch gekennzeichnet, daß der optisch gesteuerte Oszillator (20) aus einer Gruppe gewählt ist, die GUNN-Dioden, IMPATT-Dioden und Supergitterdioden umfaßt.

3. Vorrichtung nach einem der Ansprüche 1 oder 2, dadurch gekennzeichnet, daß der Modulator (30) eine Spiegelfunktion ausführt, die über ein Hochfrequenzsignal gesteuert wird, das über eine Antenne empfangen wird, indem ein optischer Träger moduliert wird, der von einer Zentralstation kommt.

4. Vorrichtung nach einem der Ansprüche 1 bis 3, dadurch gekennzeichnet, daß wenigstens einer der Spiegel (31, 33) des Fabry-Pérot Hohlraummodulators (30) auf der Grundlage von Halbleiterschichten verwirklicht ist.

5. Vorrichtung nach einem der Ansprüche 1 bis 4, dadurch gekennzeichnet, daß der Modulator (30) bei einer Wellenlänge (λ1) durchlässig ist, bei der der Oszillator (20) aktiv ist.

6. Vorrichtung nach einem der Ansprüche 1 bis 5, dadurch gekennzeichnet, daß sie wenigstens eine Kontaktschicht (25) zwischen dem optisch gesteuerten Oszillator (20) und dem Fabry-Pérot Hohlraummodulator (30) umfaßt, die bei einer Wellenlänge durchlässig ist, für die der Oszillator (20) empfindlich ist, und die so ausgebildet ist, daß sie keine elektrische oder optische Kopplung zwischen dem Oszillator (20) und dem Modulator (30) bewirkt.

7. Vorrichtung nach einem der Ansprüche 1 bis 6, dadurch gekennzeichnet, daß sie weiterhin eine einzelne optische Faser (40) umfaßt, die so ausgebildet ist, daß sie zwei Wellenlängen (λ1, λ2) dem Bauteil zuleitet: Eine erste Wellenlänge (λ1), für die der Modulator (30) durchlässig ist und der Oszillator (20) empfindlich ist, und eine zweite Wellenlänge (λ2), auf der der Modulator (30) arbeitet.

8. Vorrichtung nach Anspruch 7, dadurch gekennzeichnet, daß die optische Faser (40) das optische Signal an der Oberseite des Aufbaus leitet und der Oszillator (20) durch epitaxiales Aufwachsen vor dem Modulator (30) aufgebracht ist.

9. Vorrichtung nach Anspruch 7, dadurch gekennzeichnet, daß die optische Faser (40) das optische Signal an der Unterseite des Aufbaus quer über ein Substrat (10) leitet und der Oszillator (20) durch epitaxiales Aufwachsen nach dem Modulator (30) aufgebracht ist.

10. Vorrichtung nach einem der Ansprüche 1 bis 9, dadurch gekennzeichnet, daß der Modulator (30) so ausgebildet ist, daß er eine Wellenlänge (λ2) reflektiert, die wesentlich kürzer als die Wellenlänge (λ1) ist, für die der Oszillator (20) empfindlich ist.

11. Vorrichtung nach einem der Ansprüche 1 bis 10, dadurch gekennzeichnet, daß der Oszillator (20) zwei Kontaktschichten (21, 25) umfaßt, die dazwischen ein Supergitter (23) einschließen.

12. Vorrichtung nach Anspruch 11, dadurch gekennzeichnet, daß die beiden Kontaktschichten (21, 25) an einem Teil ihrer Dicke neben dem Supergitter (23) eine Zusammensetzungsabstufung (22, 24) umfassen.

13. Vorrichtung nach einem der Ansprüche 1 bis 12, dadurch gekennzeichnet, daß der Oszillator (20)
- eine N-Kontaktschicht (21) aus GaInAs,
- ein Supergitter (23),
- eine N-Kontaktschicht (25) aus GaInAs umfaßt.

14. Vorrichtung nach Anspruch 13, dadurch gekennzeichnet, daß die aktive Schicht (23) aus InGaAS/InGaAlAs besteht.

15. Vorrichtung nach Anspruch 13, dadurch gekennzeichnet, daß die aktive Schicht (23) aus InGaAs/(InGaAs)_{0,5}(InAIAs)_{0,5} besteht.

16. Vorrichtung nach einem der Ansprüche 1 bis 15, dadurch gekennzeichnet, daß der Modulator (30) ein Fabry-Pérot Spiegelmodulator ist, der einen ersten rückseitigen Spiegel (31), eine aktive Schicht (32) und einen zweiten frontseitigen Spiegel (33) umfaßt.

17. Vorrichtung nach Anspruch 16, dadurch gekennzeichnet, daß die aktive Schicht (32) eine Schicht mehrfacher Quantenquellen ist.

18. Vorrichtung nach einem der Ansprüche 1 bis 15, dadurch gekennzeichnet, daß der Modulator (30) ein Hohlraum Fabry-Pérot Spiegel ist.

19. Vorrichtung nach Anspruch 18, dadurch gekennzeichnet, daß der Modulator (30) einen ersten rückseitigen Spiegel (31), eine Luftschicht (32) und einen zweiten frontseitigen Spiegel (33) umfaßt.

20. Vorrichtung nach einem der Ansprüche 16 bis 19, dadurch gekennzeichnet, daß der rückseitige Spiegel (31) des Modulators (30) ein Bragg'scher Spiegel ist.

21. Vorrichtung nach einem der Ansprüche 16 bis 20, dadurch gekennzeichnet, daß der rückseitige Spiegel (31) des Modulators (30) aus periodisch abwechselnden Materialien mit einem hohen und einem niedrigen Brechungsindex und der Stärke einer Viertel-Wellenlänge besteht.

22. Vorrichtung nach einem der Ansprüche 16 bis 21, dadurch gekennzeichnet, daß der rückseitige Spiegel (31) des Modulators (30) aus einem Schichtaufbau von Halbleitermaterialien besteht.

23. Vorrichtung nach einem der Ansprüche 16 bis 22, dadurch gekennzeichnet, daß der erste Spiegel (31) des Modulators (30) aus abwechselnden Schichten aus (InGaAs)_{0,62}(InAlAs)_{0,38} und InAlAs gebildet ist.

24. Vorrichtung nach einem der Ansprüche 16 bis 23, dadurch gekennzeichnet, daß der frontseitige Spiegel (33) des Modulators (30) ein Bragg'scher Spiegel ist.

25. Vorrichtung nach einem der Ansprüche 16 bis 23, dadurch gekennzeichnet, daß der frontseitige Spiegel (33) des Modulators (30) aus der Grenzfläche zwischen einer Schicht aus einem Halbleitermaterial und Luft besteht.

26. Vorrichtung nach einem der Ansprüche 16 bis 23, dadurch gekennzeichnet, daß der frontseitige Spiegel (33) des Modulators (30) aus einem Schichtaufbau aus isolierenden Dielektrika besteht.

27. Vorrichtung nach einem der Ansprüche 16 bis 26, dadurch gekennzeichnet, daß die aktive Schicht 32 des Modulators (30) aus (InGaAs)_{0,73} (InAlAs)_{0,27} gebildet ist.

28. Vorrichtung nach Anspruch 27, dadurch gekennzeichnet, daß ein Teil der aktiven Schicht (32) P dotiert ist.

29. Vorrichtung nach einem der Ansprüche 16 bis 28, dadurch gekennzeichnet, daß der zweite Spiegel (33) aus abwechselnden Schichten aus InAlAs und (InGaAs)_{0,62}(InAlAs)_{0,38} besteht.

30. Vorrichtung nach einem der Ansprüche 18 oder 19, dadurch gekennzeichnet, daß die vergrabene Schicht (33) des Modulators (30), die zwischen zwei Spiegel (31, 32) eingefügt ist, aus InP gebildet ist.

31. Vorrichtung nach einem der Ansprüche 1 bis 30, dadurch gekennzeichnet, daß sie drei Elektroden (26, 27, 36) umfaßt: Eine Elektrode, die auf einer Kontaktschicht (21) des Oszillators (20) aufgebracht ist, eine Elektrode (36), die auf dem Modulator (30) aufgebracht ist, und eine Elektrode (27), die dem Oszillator (20) und dem Modulator (30) gemeinsam ist.

32. Vorrichtung nach einem der Ansprüche 1 bis 30, dadurch gekennzeichnet, daß sie vier Elektroden (26, 27, 37, 36) umfaßt: Zwei Elektroden (26, 27), die auf die Kontaktschichten des Oszillators (20) aufgebracht sind und zwei Elektroden (36, 37), die auf dem Modulator (30) aufgebracht sind.

33. Vorrichtung nach einem der Ansprüche 1 bis 32, dadurch gekennzeichnet, daß der Oszillator (20) das Hochfrequenzträgersignal selbst erzeugt und wie ein Mischer zwischen seiner Eigenschwingung, die ihm durch die Eigenschaften der Schaltung gegeben ist, in der er liegt, und dem Datenträgersignal arbeitet, das ihn über den optischen Weg erreicht.

34. Vorrichtung nach einem der Ansprüche 1 bis 32, dadurch gekennzeichnet, daß der Oszillator eine optische Sperre ist, das Hochfrequenzträgersignal vom optischen Verteilungsnetz kommt und die Frequenz des Oszillators permanent auf den Momentanwert der Millimeterwellenfrequenz geregelt und synchronisiert ist, die an der Lichtwelle vorliegt.

35. Vorrichtung nach Anspruch 34, dadurch gekennzeichnet, daß der Oszillator (20) eine direkte Sperre ist, wobei das optische Signal den Oszillator selbst steuert.

36. Vorrichtung nach Anspruch 34, dadurch gekennzeichnet, daß der Oszillator eine indirekte Sperre ist, welcher Oszillator (20) durch ein elektrisches Signal gesperrt wird, das von einem separaten Photodetektor (30) ausgegeben wird.

37. Vorrichtung nach Anspruch 36, dadurch gekennzeichnet, daß der Oszillator (20) durch ein elektrisches Signal gesperrt wird, das von einem einen Photodetektor bildenden Modulator (30) ausgegeben wird.

38. Nachrichtenverbindungssystem mit einem optischen Faserverteilungsnetz zwischen wenigstens einer Zentralstation und mehreren Stationen, die jeweils mit einem Hochfrequenzsignalsender ausgerüstet sind und ein Netz zum Hochfrequenzsignalzugriff am Kopf der optischen Faser bilden, dadurch gekennzeichnet, daß es eine bidirektionale Vorrichtung zur Signalumsetzung nach einem der Ansprüche 1 bis 37 in jeder der Stationen umfaßt.
